# EUROPEAN PATENT APPLICATION

(11) **EP 3 633 572 A1**
(43) Date of publication of application: **08.04.2020**
(21) Application number: 19200748.2
(22) Date of filing: 01.10.2019
(51) Int. Cl.: G06Q 20/32, G06Q 20/20, G07G 1/00, G06Q 20/18, G06Q 20/28

(54) **QUICK CHECKOUT PRICE TAG WITH NFC**

(30) Priority: 04.10.2018 US 201862740954 P; 21.11.2018 US 201816198290
(71) Applicant: Galatea Technology LLC, San Dimas, CA 91773 (US)
(72) Inventor: HUYNH, Chi, San Dimas, CA California 91773 (US)
(74) Representative: Harding, Andrew Philip

(57) **Abstract**

A Near Field Communication (NFC) system, method, and computer program product are provided for interacting with a customer device enabled with a NFC scanning capability. The NFC system includes a checkout price tag initiating a purchase transaction for a product associated with the checkout price tag responsive to a scanning of the checkout price tag. The checkout price tag has a customer device scannable NFC physical tag encoded with a unique identifier, a product price, and a description of the product.

## Description

### RELATED APPLICATION INFORMATION

This application claims priority to U.S. Provisional Application Serial Number 62/740,954, filed on October 4, 2018, incorporated herein by reference herein its entirety.

### BACKGROUND

### Technical Field

The present invention relates generally to Near Field Communication (NFC) devices, and more particularly to quick checkout price tag with NFC.

### Description of the Related Art

Due to the convenience of electronic payments, such payments are becoming more prevalent in our daily lives. Debit cards, credit cards, bank cards and payment processors play an increasingly important role in the transfer of settlement. There are many payment methods currently available. Among the most popular is PayPal® for web-based payments, Apple Pay® for in-store transactions, and Android Pay® for peer-to-peer transactions. All of these payment methods allow users to send and/or receive money. However, these payment methods require the user to use a checkout terminal or visit a website and use a checkout cart to make a payment. Hence, there is a need for a faster and new payment process whereby users can buy and pay for products directly without having to use a payment terminal, company website, or cashier.

### SUMMARY

According to an aspect of the present invention, a Near Field Communication (NFC) system is provided for interacting with a customer device enabled with a NFC scanning capability. The NFC system includes a checkout price tag initiating a purchase transaction for a product associated with the checkout price tag responsive to a scanning of the checkout price tag. The checkout price tag has a customer device scannable NFC physical tag encoded with a unique identifier, a product price, and a description of the product.

According to another aspect of the present invention, a method is provided for using Near Field Communication (NFC) to interact with a customer device enabled with a NFC scanning capability. The method includes initiating, using a checkout price tag, a purchase transaction for a product associated with the checkout price tag responsive to a scanning of the checkout price tag. The checkout price tag has a customer device scannable NFC physical tag encoded with a unique identifier, a product price, and a description of the product.

According to yet another aspect of the present invention, a computer program product is provided for using Near Field Communication (NFC) to interact with a customer device enabled with a NFC scanning capability. The computer program product includes a non-transitory computer readable storage medium having program instructions embodied therewith. The program instructions are executable by a computer to cause the computer to perform a method. The method includes initiating, using a checkout price tag, a purchase transaction for a product associated with the checkout price tag responsive to a scanning of the checkout price tag. The checkout price tag has a customer device scannable NFC physical tag encoded with a unique identifier, a product price, and a description of the product.

These and other features and advantages will become apparent from the following detailed description of illustrative embodiments thereof, which is to be read in connection with the accompanying drawings.

### BRIEF DESCRIPTION OF THE DRAWINGS

The following description will provide details of preferred embodiments with reference to the following figures wherein:
FIG. 1 is a block diagram showing an exemplary processing system to which the present invention may be applied, in accordance with an embodiment of the present invention;
FIG. 2 is a block diagram showing an exemplary system for NFC communications to which the present invention can be applied, in accordance with an embodiment of the present invention;
FIG. 3 is a flow diagram showing an exemplary initial method of setting up NFC tags, in accordance with an embodiment of the present invention;
FIG. 4 is a flow diagram showing an exemplary initial method performed responsive to a client (seller) setting up the system for their specific company before allowing customers to use the system, in accordance with an embodiment of the present invention;
FIGs. 5-6 are flow diagrams showing an exemplary initial method performed responsive to a customer buying a product, in accordance with an embodiment of the present invention; and
FIG. 7 is a block diagram showing an exemplary purchase scenario, in accordance with an embodiment of the present invention.

### DETAILED DESCRIPTION

The present invention is directed to quick checkout price tag with NFC.

Advantageously overcoming the aforementioned deficiencies of the prior art, the present invention allows a buyer to scan a NFC quick checkout price tag using the buyer's mobile device (e.g., a smart phone), receive a digital invoice in response to the scan, and then pay the digital invoice by hitting a Pay Now button, all while avoiding having to visit any website or deal with a payment terminal or cashier. In this way, the purchasing experience is streamlined and more efficient than prior art payment approaches.

In one or more embodiments, the present invention can involve a "quick checkout" application or platform and a "quick checkout price tag". The quick checkout application and quick checkout price tag can allow effortless transactions in the future, anytime and anywhere.

In an embodiment, the quick checkout price tag can include a Near Field Communication (NFC) chip. The quick checkout price tag can be encoded and assigned with the unique ID of a company and can include a product's price and description as well as a company's banking info for facilitating payment.

The quick checkout application or platform can be implemented as a software implementation for mobile phones and mobile devices with a checkout payment platform. The platform can allow a company to register to be a quick checkout host in the cloud. The quick checkout platform can be assigned a unique company ID, a product's price, description and company banking information in order to receive payment which is synchronized with the quick checkout price tag.

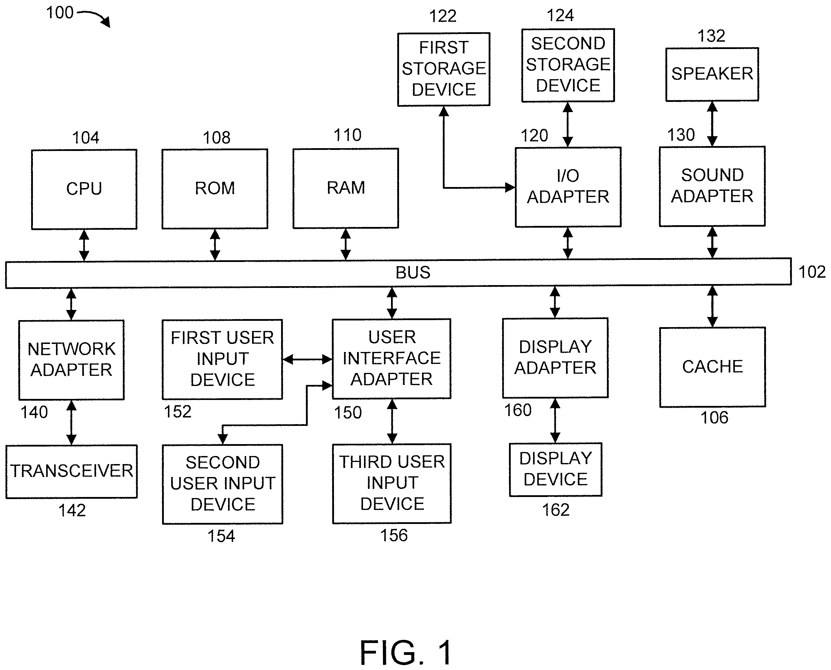

FIG. 1 is a block diagram showing an exemplary processing system 100 to which the present invention may be applied, in accordance with an embodiment of the present invention. The processing system 100 includes at least one processor (CPU) 104 operatively coupled to other components via a system bus 102. A cache 106, a Read Only Memory (ROM) 108, a Random Access Memory (RAM) 110, an input/output (I/O) adapter 120, a sound adapter 130, a network adapter 140, a user interface adapter 150, and a display adapter 160, are operatively coupled to the system bus 102. At least one Graphics Processing Unit (GPU) 194 is operatively coupled to the system bus 102.

A first storage device 122 and a second storage device 124 are operatively coupled to system bus 102 by the I/O adapter 120. The storage devices 122 and 124 can be any of a disk storage device (e.g., a magnetic or optical disk storage device), a solid state magnetic device, and so forth. The storage devices 122 and 124 can be the same type of storage device or different types of storage devices.

A speaker 132 is operatively coupled to system bus 102 by the sound adapter 130. A transceiver 142 is operatively coupled to system bus 102 by network adapter 140. A display device 162 is operatively coupled to system bus 102 by display adapter 160.

A first user input device 152, a second user input device 154, and a third user input device 156 are operatively coupled to system bus 102 by user interface adapter 150. The user input devices 152, 154, and 156 can be any of a keyboard, a mouse, a keypad, an image capture device, a motion sensing device, a microphone, a device incorporating the functionality of at least two of the preceding devices, and so forth. Of course, other types of input devices can also be used, while maintaining the spirit of the present invention. The user input devices 152, 154, and 156 can be the same type of user input device or different types of user input devices. The user input devices 152, 154, and 156 are used to input and output information to and from system 100.

Of course, the processing system 100 may also include other elements (not shown), as readily contemplated by one of skill in the art, as well as omit certain elements. For example, various other input devices and/or output devices can be included in processing system 100, depending upon the particular implementation of the same, as readily understood by one of ordinary skill in the art. For example, various types of wireless and/or wired input and/or output devices can be used. Moreover, additional processors, controllers, memories, and so forth, in various configurations can also be utilized as readily appreciated by one of ordinary skill in the art. These and other variations of the processing system 100 are readily contemplated by one of ordinary skill in the art given the teachings of the present invention provided herein.

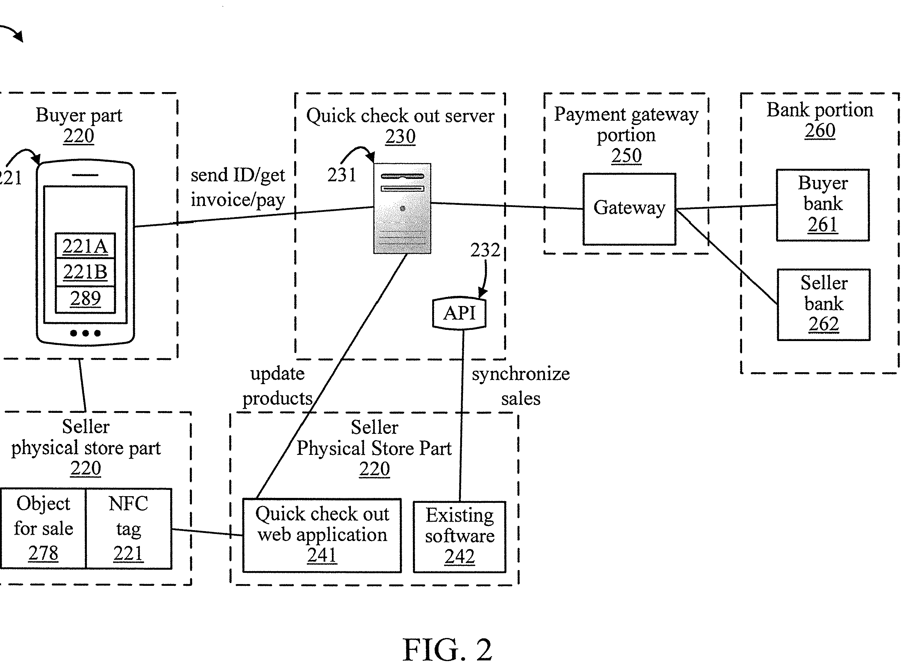

Moreover, it is to be appreciated that environment 200 described below with respect to FIG. 2 is an environment for implementing respective embodiments of the present invention. Part or all of processing system 100 may be implemented in one or more of the elements of environment 200.

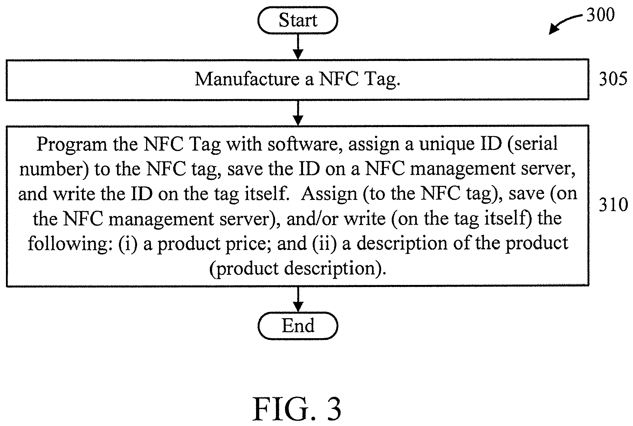

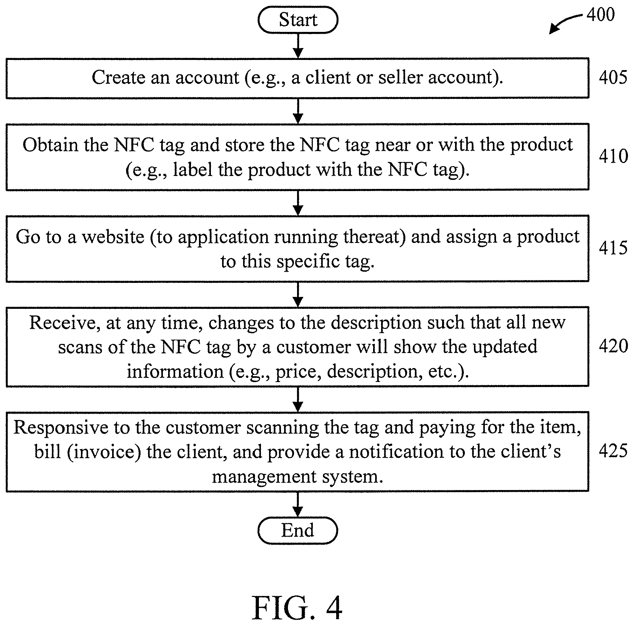

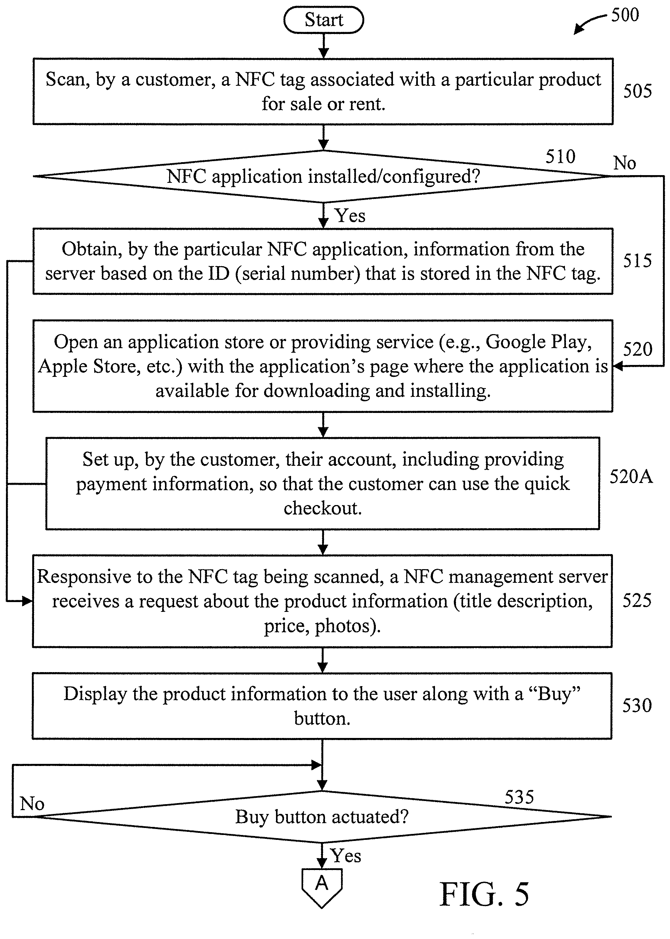

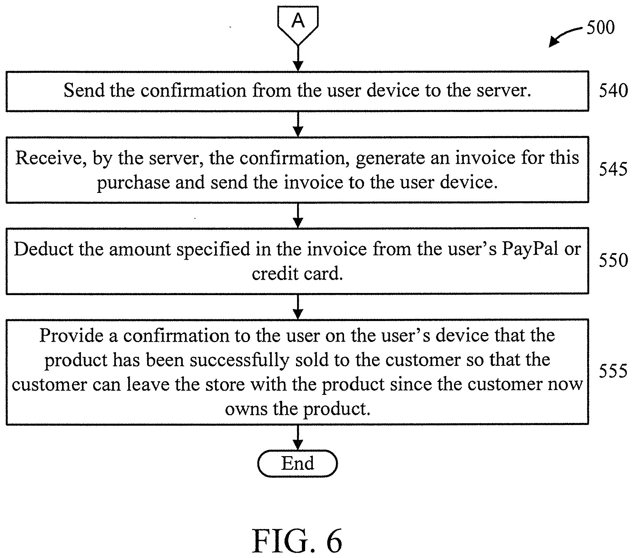

Further, it is to be appreciated that processing system 100 may perform at least part of the method described herein including, for example, at least part of method 300 of FIG. 3 and/or at least part of method 400 of FIG. 4, and/or at least part of method 500 of FIGs. 5-6. Similarly, part or all of environment 200 may be used to perform at least part of method 300 of FIG. 3 and/or at least part of method 400 of FIG. 4, and/or at least part of method 500 of FIGs. 5-6.

FIG. 2 is a block diagram showing an exemplary environment 200 to which the present invention can be applied, in accordance with an embodiment of the present invention.

The environment 200 includes various portions relating to various entities capable of being involved in embodiments of the present invention. The various portions include a buyer portion 210, a seller physical store portion 220, a quick check out server (aka "NFC management server") 230, a seller portion 240,a payment gateway portion 250, and a bank portion 260.

The buyer portion 210 can include one or more customer devices 211. A quick checkout software application 289 can be deployed on or accessed from each of the customer devices 211 depending upon the implementation. The quick checkout software application 289 is configured to allow the user to seamlessly purchase an item using the item's associated NFC tag to complete the purchase transaction.

The seller physical store portion 220 can include objects (for sale) having NFC checkout price tags 221 (aka "NFC tags" in short) associated therewith.

The quick checkout server 230 can include a backend 231 and an Application Programming Interface (API) 232.

The seller portion 240 can include a quick checkout web application 241 and existing software 242. The quick checkout web application 241 can be used by the seller to, for example, but not limited to, manage products and NFC tags, and update products and their tags. The existing software 242 can be used to synchronize sales with the NFC management server 230 via the API 232.

The payment gateway portion 250 can include, for example, but is not limited to, payment services such as, for example, but not limited to, PayPal®, and so forth.

The bank portion 260 can include one or more banks such as a buyer bank 261 and a seller bank 262 for supporting a purchase transaction between a buyer and a seller.

The various elements of the environment can be considered to form a Near Field Communication (NFC) system 290 which interfaces with other elements such as the customer devices 211. The customer devices 211 interface with the NFC system 290 as described herein.

The NFC checkout price tags 221 and/or the NFC management server 230 and/or the quick checkout software application 289 can be part of a computing platform 270 for implementing one or more embodiments of the present invention. In an embodiment, a cloud computing platform can be used. In an embodiment, the NFC management server 230 and/or at least part of the quick checkout software application 289 can be implemented as one or more nodes in a cloud computing environment. While one NFC management server 230 is shown in the illustrative example of FIG. 2, in other embodiments, more than one server can be used, with each corresponding to a particular seller or subset of sellers depending upon the implementation.

Each of the customer devices 221 has a NFC scanning capability, via a NFC scanner 221A, for scanning the NFC checkout price tags 221. Each of the customer devices 221 further can have another type of communication capability, via a transceiver 221B, for communicating with the NFC management server 230. For example, cellular, WIFI, Bluetooth, and so forth can be used.

The NFC checkout price tags 221 are scannable by the customer devices 211 in the seller physical store 220 which can be implemented as a store or a kiosk (hereinafter generally referred to as stores and collectively represented by the figure reference numeral 220) such as brick and mortar stores in order to achieve a seem-less, checkout terminal-free and store-employee-free purchase of a product for sale in any of the stores 220 via the NFC checkout price tags 221, the customer devices 211, and the NFC management server 230.

Each of the NFC checkout price tags 221 is associated with a respective product 278 for sale. To that end, each of the NFC checkout price tags 221 includes a unique serial number which is associated with a respective product, a price of the respective product, and a description of the respective product. Other information (e.g., seller information (company name, branch, etc.), purchasing information (e.g., forms of payment accepted, banking information, etc.), and so forth) can be associated, depending upon the implementation.

Each of the NFC checkout price tags 221 can be associated with a respective product by being placed proximate to or being attached to the product or a physical object corresponding to the product such as, for example, but not limited to, a printed photograph, a drawing, a postcard, a brochure, a newspaper, a magazine, an advertisement, a poster, a book, a shelf, a display arrangement, a kiosk, and so forth. In an embodiment, the NFC checkout price tags 221 can be implemented as stickers that stick to objects being sold.

Each checkout price tag 221 initiates a purchase transaction for a product associated with the checkout price tag responsive to a scanning of the checkout price tag. The checkout price tag has a customer device scannable Near Field Communication (NFC) physical tag encoded with a unique identifier, a product price, and a description of the product.

The customer devices 211 can include, for example, but are not limited to, mobile smart phones, smart watches, tablets, laptops, media devices, and so forth.

In an embodiment, the product price and the description of the product are encoded into the unique identifier. In an embodiment, information for retrieving the product price and the description of the product are encoded into the unique identifier. In an embodiment, information for retrieving the product price and the description of the product from an associate memory are encoded into the unique identifier to ensure a quick access time with a minimal index overhead.

In an embodiment, the NFC management server 230 manages the purchase transaction for each of one or more products registered with the NFC management server 230 with respect to a particular seller. In an embodiment, each unique identifier is associated with one or more sellers, where each of the one or more sellers is served by the NFC management server 230. The NFC management server 230 manages the purchase transaction for each product registered with the NFC management server with respect to each of the one or more sellers. Such management can involve, for example, but is not limited to, maintaining mappings and/or listings of (i) sellers to products for sale, (iii) prices and other product information for the products, and (iii) profile and other information for the sellers, generating invoice information, maintaining sale records, and so forth.

In an embodiment, the NFC management server 230 (i) generates a customer payable invoice for the purchase transaction, responsive to receiving a confirmation of a customer actuating a buy button provided on the customer device when the customer device scans the checkout price tag, and (ii) transmits the customer payable invoice to the customer device.

The quick checkout software application 289 is in signal communication with the NFC management server 230. The quick checkout software application 289 is configured to automatically open the customer payable invoice on a display of the customer device 211 in an absence of opening a website of a brand of the product by the customer device.

In an embodiment, the computing platform, implemented at least by the NFC management server 230, can provide a registration service, via the quick checkout web application 241, to sellers for enabling the sellers to use the NFC system 290 to accomplish the purchase transaction for registered products. In an embodiment, the registration service can receive at least a company profile, a list of products, and a list of product profiles, and a list of unique identifiers. Each of the unique identifiers can correspond to a respective one or respective type of the products. Each of the products can have a particular checkout price tag 221 associated therewith to enable a respective purchase transaction for any of the products.

In an embodiment, the NFC platform 270 provides a seller selectable option of the checkout price tag corresponding to (i) an actual product to be bought by a customer and (ii) a sample product representative of the actual product deliverable only subsequent to a payment confirmation. In an embodiment, the store 220 can be an inventory-less kiosk displaying one or more product samples to be sold and later delivered responsive to scanning the checkout price tag and a tapping a buy button related to the checkout price tag of the one or more product samples.

In an embodiment, the registration service and the purchase transaction are provided as respective cloud services using a cloud computing configuring for the computing platform.

In an embodiment, the computing platform, through at least the NFC management server 230, receives any particular one of a plurality of customer selectable electronic payment services. The plurality of customer selectable electronic payment services can include, for example, but are not limited to, at least one e-banking system internal to and implemented by a respective one of the plurality of sellers. The purchase transaction is cashier-free, payment terminal free, and bank wire transfer free, by the system automatically invoking at least one electronic payment service which is (i) adapted for use on a mobile device of a customer purchasing the product and (ii) accepted by the seller of the product. Any of a number of available electronic payment services adapted to, or certainly readily usably by mobile devices, can be used including, but not limited to credit cards, PayPal®, etc.

In an embodiment, the NFC system is configured for use in a brick and mortar store 220 to perform e-commerce as the purchase transaction by an actual present customer in the brick and mortar store 220. The NFC system 290, through at least the NFC management server, can receive any particular one of a plurality of user selectable e-commerce payment services including, for example, but not limited to, PayPal®, MasterCard®, Visa®, American Express®, its own internal banking system, and so forth.

In an embodiment, the store 220 can be an inventory-less kiosk displaying one or more product samples to be sold and later delivered responsive to scanning the checkout price tag and a tapping a buy button related to the checkout price tag of the one or more product samples.

FIG. 3 is a flow diagram showing an exemplary initial method 300 of setting up NFC tags, in accordance with an embodiment of the present invention.

At block 305, manufacture a NFC Tag. The tag can be manufactured, for example, using a NFC writer, a readable/writable NFC chip, and a structure for holding the chip. The structure can be, for example, but is not limited to, a sticker, a card, a picture, a tag, and so forth.

At block 310, program the NFC Tag with software, assign a unique ID (serial number) to the NFC tag, save the ID on a NFC management server, and write the ID on the tag itself. This ID can then be assigned to a product for a specific customer. The software is configured to manage NFC tag functions such as receiving, storing, transmitting, and so forth.

In an embodiment, block 310 can include block 310.

In block 310, in addition to, or as part of the unique ID, assign (to the NFC tag), save (on the NFC management server), and/or write (on the tag itself) the following: (i) a product price; and (ii) a description of the product (product description). In an embodiment, the product price and the product description, or information to readily identify the same, for example in an associated memory, are encoded into the unique identifier. These and other variations for implementing a unique ID capable of identifying one or more of a seller, a product, a product description, a product price, product payment information, and so forth are readily determined by one of ordinary skill in the art given the teachings of the present invention provided herein, while maintaining the spirit of the present invention.

In an embodiment, the unique identifier can be associated with one of multiple sellers served by a NFC management server that manages the purchase transaction for product registered with the NFC management server with respect to the multiple sellers. For example, a particular subset of the unique identifier (1-*m* Most Significant Bits (MSBs) or 1-*n* Least Significant Bits (LSBs), etc.) could be used to identify the sellers with respect to each other. In an embodiment, 1-*m* MSBs are used to identify a seller, and 1-*n* LSBs are used to identify the particular product. Of course, other arrangements can be used while maintaining the spirit of the present invention.

In an embodiment, the subset of the ID used to identify the seller can further be used to identify seller related information (e.g., seller payment information). In an embodiment, the server and/or the application on the user device can be used to identify the seller related information, based on the subset of the ID used to identify the seller.

In an embodiment, the subset of the ID used to identify the product can further be used to identify product related information (e.g., product description, product price, any applicable discounts on product price, product rating, product expiration date, etc). In an embodiment, the server and/or the application on the user device can be used to identify the product information, based on the subset of the ID used to identify the product.

FIG. 4 is a flow diagram showing an exemplary initial method 400 performed responsive to a client (seller) setting up the system for their specific company before allowing customers to use the system, in accordance with an embodiment of the present invention. The blocks of method 400 are performed by the client.

At block 405, create an account (e.g., a client or seller account). In an embodiment, the client connects their product management system to the NFC system of the present invention and adds the details about their company to the NFC system. The account can involve user (company) name, email address, passcode, phone number, company profile, banking information and method, and so forth.

At block 410, obtain the NFC tag and store the NFC tag near or with the product (e.g., label the product with the NFC tag).

At block 415, go to a website (to application running thereat) and assign a product to this specific tag. For the product, enter a price, a title, and a preferably brief but informative description of the product that includes one or more photos of the product.

At block 420, receive, at any time, changes to the description such that all new scans of the NFC tag by a customer will show the updated information (e.g., price, description, etc.). Permit or use the ability to re-assign the tag to another product.

At block 425, responsive to the customer scanning the tag and paying for the item, bill (invoice) the client, and provide a notification to the client's management system.

FIGs. 5-6 are flow diagrams showing an exemplary initial method 500 performed responsive to a customer buying a product, in accordance with an embodiment of the present invention.

At block 505, scan, by a customer, a NFC tag associated with a particular product for sale or rent. For the purpose of illustration, the example will continue relative to a product for sale.

At block 510, determine, by scanning software, if a particular NFC application is installed and configured on the user device. If so, then proceed to block 515. Otherwise, proceed to block 520.

At block 515, obtain, by the particular NFC application, information from the server based on the ID (serial number) that is stored in the NFC tag.

At block 520, open an application store or providing service (e.g., Google Play®, Apple® Store, etc.) with the application's page where the application is available for downloading and installing.

If the customer does not already have the application installed and configured, then the customer will have to do that before using the NFC service provided by the present invention.

In an embodiment, block 520 can include block 520A.

At block 520A, set up, by the customer, their account, including providing payment information, so that the customer can use the quick checkout. The customer can also set up the account later or every time the customer tries to buy something.

At block 525, responsive to the NFC tag being scanned, a NFC management server receives a request about the product information (title description, price, photos).

At block 530, display the product information to the user along with a "Buy" button. The "Buy" button can be replaced by a "Pay Now" button or similar functioning element.

At block 535, determine whether the "Buy button has been actuated. If so, then proceed to block 540. Otherwise, return to block 535. The return can be made for a specified amount of time, where thereafter a timeout message may be displayed to the user on the user's device.

Further regarding block 535, the customer may select in settings to use FaceID (for authentication using their face, available on some phones) or TouchID (for authentication using a fingerprint, available on some phones) or SMS authentication. The customer can configure this in settings in order to have more security over the process and to not allow anyone who is using his phone to make payments.

At block 540, send the confirmation from the user device to the server.

At block 545, receive, by the server, the confirmation, generate an invoice for this purchase and send the invoice to the user device.

At block 550, deduct the amount specified in the invoice from the user's PayPal or credit card.

At block 555, provide a confirmation to the user on the user's device that the product has been successfully sold to the customer so that the customer can leave the store with the product since the customer now owns the product.

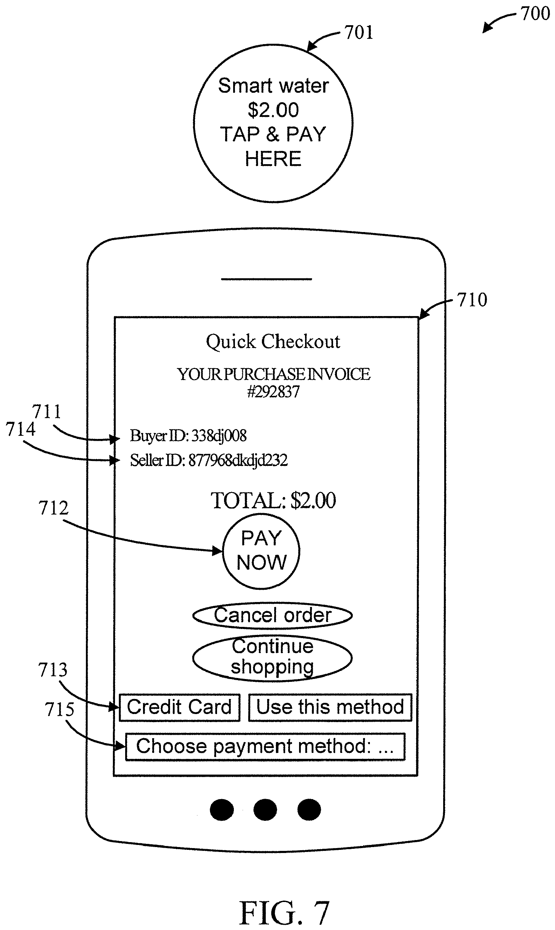

A description will now be given regarding an exemplary scenario to which the present invention can be applied. The following description will now be given relative to FIG. 7, which is a block diagram showing an exemplary purchase scenario 700, in accordance with an embodiment of the present invention.

A person is at an airport and needs to buy a bottle of water. The store is full of people and the cashier registration line is long and he has to catch his plane quickly without delay.

He comes to the water aisle and finds the water bottle with a quick checkout price tag 701 that says "Smart water $2.00 TAP & PAY HERE". He picks up the water bottle and, using his mobile phone, taps the quick checkout price tag 701. He will see an invoice 710 popping up on his phone showing "Xwater bottle"= $2.00, the payment method (having previously selected preferred payment method) and a pay now button. He clicks on the "pay now" button and leaves the store without having to go to the cashier. Hence, the user did not have to search for a company web address, or look for a product online, or wait in a long line to pay at the cashier, thus making the user have a quick and efficient shopping experience.

Regarding the invoice 710, note that the same shows a buyer ID/account number 711, a "PAY NOW" button 712, a pre-selected "payment method" button 713, a seller ID/account number 714, a selection mechanism 715 for selecting other payment methods.

A description will now be given regarding another exemplary scenario to which the present invention can be applied.

A person is on a plane, or sitting at home or on the beach looking at a catalog. She sees an image of a piece of jewelry in the catalog and wants to purchase the item. Luckily, this item has a quick checkout price tag in the catalog. She uses her mobile phone to tap the quick checkout price tag and sees an invoice popping up showing "Xdiamond ring cost to be payed is $5,800". The screen also displays a payment method (previously selected preferred payment method) and a "pay now" button. She clicks on the pay now button that will pay for the product without having to search for a company web address, buying the product online or leaving the beach or asking a sales agent for assistance. If on a plane, the sale agent receives a notification and delivers the item to the airline passenger at her seat. The present invention gives the buyer the ability to make a purchase anywhere and at any time, quicker and easier than most checkout processes.

A description will now be given regarding yet another exemplary scenario to which the present invention can be applied.

A person is in a supermarket. He sees a toothbrush, a can of coffee and a personal care item. He wants to purchase these items but he is too shy to show the personal care item to the cashier. Luckily for him, each of the items has the quick checkout price tag. He picks up the toothbrush, uses his mobile phone by tapping to the quick checkout price tag , and sees an invoice showing "toothbrush= $3.00", the payment method (previously selected preferred payment method), and pay now button and a continue shopping button (he can add more items before make a payment). He clicks on continue shopping button and repeats the process for the other items and then finally clicks on the pay now button that will pay for the products without having to wait in the long line at the cashier.

A description will now be given regarding still another exemplary scenario to which the present invention can be applied.

This scenario involves a restaurant with multiple tables for dining. Each table has a NFC sticker associated therewith with a unique ID pertaining to that table. Each unique ID represents customer spending at that table. This scenario further involves a main cashier register with a NFC software. This main cashier register stores all the NFC IDs of each table in the restaurant. This scenario also involves a NFC application on a diner's mobile phone. The diner downloads the application on their mobile phone, registers with the NFC service, and inputs his payment information that is to be used with the service. The scenario additionally involves a NFC cloud server. The NFC cloud server hosts restaurants license, registered NFC store IDs, and the NFC ID for each table with in this restaurant.

A customer comes into a restaurant, selects a table, and looks over a food menu. A waitress comes over to the customer, holding a tablet, and taking orders. After the waitress takes the customer's order, the waitress assigns the order to table 1. An application will assign the orders for that customer to the NFC sticker associated with table 1.

At some point, the customer is ready to pay. The customer uses his mobile phone and taps the NFC sticker at his table. In response, an invoice pops up on the user's mobile device for payment. The customer then selects his preferred payment method, clicks pay, and receives a receipt via email. In this way, the user has paid and can leave without having to call the waitress and wait for the waitress to generate and bring a bill, take payment, and return with a receipt, thus saving the user a significant amount of time.

It is to be appreciated that in some embodiments, an invoice is automatically generated and provided to the buyer responsive to the buyer scanning a NFC tag. That invoice can include a "pay now" button in order to complete the transaction. In other embodiments, the invoice is automatically generated after the buyer scans the NFC tag and actuates a "pay now" button that is generated on the user's device responsive to the scan. The manner in which the invoice is generated (i.e., responsive to the scanning of the tag itself or responsive to the actuating of the pay now button subsequent to the scanning of the tag) depends upon the implementation. These and other variations of the present invention a readily contemplated by one of ordinary skill in the art given the teachings of the present invention provided herein, while maintaining the spirit of the present invention.

A description will now be given regarding a further exemplary scenario to which the present invention can be applied.

In this scenario, a printed catalog is used that has a NFC tag inside. In an embodiment, a printer having the ability to print using electrically conductive ink can implement printing a NFC antenna with a NFC chip in the catalog without having to actually affix a sticker to the catalog.

In an embodiment, a main NFC tag can be used to represent all items on a given catalog page or even all items in the entire catalog. In this way, the process for generating and affixing NFC tags can be simplified, providing a more streamlined purchase experience for a buyer. Thus, depending upon the implementation, a given NFC tag can correspond to one product or more than one product. Moreover, depending upon the implementation, when a NFC tag corresponds to more than one product, the NFC tag can be assigned at a page-level (to correspond to all the products on a page), a catalog-level (to correspond to all the products in the catalog), and so forth. In this way, buyer purchasing is simplified and streamlined, resulting in less buyer frustration and quicker sales. In further support of the preceding, different encoding schemes can be used to compress and/or otherwise efficiently represented data in order to include, for example, the unique product ID, product price and product description for all the products on a given page or in a given catalog in a single NFC tag.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as SMALLTALK, C++ or the like, and conventional procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

Reference in the specification to "one embodiment" or "an embodiment" of the present invention, as well as other variations thereof, means that a particular feature, structure, characteristic, and so forth described in connection with the embodiment is included in at least one embodiment of the present invention. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

Having described preferred embodiments of a system and method (which are intended to be illustrative and not limiting), it is noted that modifications and variations can be made by persons skilled in the art in light of the above teachings. It is therefore to be understood that changes may be made in the particular embodiments disclosed which are within the scope of the invention as outlined by the appended claims. Having thus described aspects of the invention, with the details and particularity required by the patent laws, what is claimed and desired protected by Letters Patent is set forth in the appended claims.

### Representative features

1. A Near Field Communication (NFC) system for interacting with a customer device enabled with a NFC scanning capability, comprising:
   a checkout price tag initiating a purchase transaction for a product associated with the checkout price tag responsive to a scanning of the checkout price tag, the checkout price tag having a customer device scannable NFC physical tag encoded with a unique identifier, a product price, and a description of the product.
2. The NFC system of clause 1, wherein the customer device is a mobile smart phone.
3. The NFC system of clause 1, wherein the product price and the description of the product are encoded into the unique identifier.
4. The NFC system of clause 1, wherein information for retrieving the product price and the description of the product from an associate memory are encoded into the unique identifier.
5. The NFC system of clause 1, further comprising a NFC management server for managing the purchase transaction for each of a plurality of products registered with the NFC management server with respect to a particular seller.
6. The NFC system of clause 1, wherein the unique identifier is associated with one of a plurality of sellers served by a NFC management server that manages the purchase transaction for each of a plurality of products registered with the NFC management server with respect to the plurality of sellers.
7. The NFC system of clause 1, further comprising a NFC management server for (i) generating a customer payable invoice for the purchase transaction, responsive to receiving a confirmation of a customer actuating a buy button provided on the customer device when the customer device scans the checkout price tag, and (ii) transmitting the customer payable invoice to the customer device.
8. The NFC system of clause 7, further comprising a software application, in signal communication with the NFC management server, configured to automatically open the customer payable invoice on a display of the customer device in an absence of opening a website of a brand of the product by the customer device.
9. The NFC system of clause 7, further comprising a computing platform, implemented at least by the NFC management server, for providing a registration service to sellers for enabling the sellers to use the NFC system to accomplish the purchase transaction for registered products.
10. The NFC system of clause 9, wherein the registration service receives at least a company profile, a list of products, and a list of product profiles, and a list of unique identifiers, wherein each of the unique identifiers corresponds to a respective one or respective type of the products, and wherein each of the products has the checkout price tag associated therewith for enabling the purchase transaction there for.
11. The NFC system of clause 9, wherein the registration service and the purchase transaction are provided as respective cloud services using a cloud computing configuring for the computing platform.
12. The NFC system of clause 7, wherein the computing platform, through at least the NFC management server, receive any particular one of a plurality of customer selectable electronic payment services.
13. The NFC system of clause 12, wherein the plurality of customer selectable electronic payment services comprises at least one e-banking system internal to and implemented by a respective one of the plurality of sellers.
14. The NFC system of clause 7, wherein the NFC system is configured for use in a brick and mortar store to perform e-commerce as the purchase transaction by an actual present customer in the brick and mortar store.
15. The NFC system of clause 14, wherein the e-commence involves {checkout station}-free checkout and purchase of products.
16. The NFC system of clause 1, wherein the NFC platform provides a seller selectable option of the checkout price tag corresponding to (i) an actual product to be bought by a customer and (ii) a sample product representative of the actual product deliverable only subsequent to a payment confirmation.
17. The NFC system of clause 1, wherein the purchase transaction is cashier-free, payment terminal free, and bank wire transfer free, by automatically invoking at least one of a plurality of electronic payment services for use on a mobile device of a customer purchasing the product that is accepted by the seller of the product.
18. The NFC system of clause 1, wherein the checkout price tag is associated with a physical object proximate to the product, the physical object selected from the group consisting of a printed photograph, a drawing, a postcard, a brochure, a newspaper, a magazine, an advertisement, a poster, a book, and a kiosk.
19. The NFC system of clause 1, further comprising an inventory-less kiosk displaying one or more product samples to be sold and later delivered responsive to scanning the checkout price tag and a tapping a buy button related to the checkout price tag of the one or more product samples
20. The NFC system of clause 1, wherein the checkout price tag is implemented as a sticker having a readable NFC chip embedded therein.
21. The NFC system of clause 1, further comprising a printer for printing the checkout price tag to include a NFC antenna and NFC chip using electrically conductive ink.
22. The NFC system of clause 1, wherein the customer device scannable NFC physical tag is encoded with the unique identifier, the product price, and the description of the product for all products on a given catalog page of a catalog to provide a single page-level NFC tag for the given catalog page enabling purchasing all of the products on the given catalog page using the single NFC tag.
23. The NFC system of clause 1, wherein the customer device scannable NFC physical tag is encoded with the unique identifier, the product price, and the description of the product for all products in a catalog to provide a single catalog-level NFC tag enabling purchasing of all of the products in the catalog using the single NFC tag.
24. A method for using Near Field Communication (NFC) to interact with a customer device enabled with a NFC scanning capability, the method comprising:
   initiating, using a checkout price tag, a purchase transaction for a product associated with the checkout price tag responsive to a scanning of the checkout price tag, the checkout price tag having a customer device scannable NFC physical tag encoded with a unique identifier, a product price, and a description of the product.
25. A computer program product for using Near Field Communication (NFC) to interact with a customer device enabled with a NFC scanning capability, the computer program product comprising a non-transitory computer readable storage medium having program instructions embodied therewith, the program instructions executable by a computer to cause the computer to perform a method comprising:
   initiating, using a checkout price tag, a purchase transaction for a product associated with the checkout price tag responsive to a scanning of the checkout price tag, the checkout price tag having a customer device scannable NFC physical tag encoded with a unique identifier, a product price, and a description of the product.

## Claims

1. A Near Field Communication (NFC) system for interacting with a customer device enabled with a NFC scanning capability, comprising:
a checkout price tag initiating a purchase transaction for a product associated with the checkout price tag responsive to a scanning of the checkout price tag, the checkout price tag having a customer device scannable NFC physical tag encoded with a unique identifier, a product price, and a description of the product.

2. The NFC system of claim 1, wherein the customer device is a mobile smart phone, and/or wherein the product price and the description of the product are encoded into the unique identifier, and/or wherein information for retrieving the product price and the description of the product from an associate memory are encoded into the unique identifier, and/or wherein the unique identifier is associated with one of a plurality of sellers served by a NFC management server that manages the purchase transaction for each of a plurality of products registered with the NFC management server with respect to the plurality of sellers.

3. The NFC system of claim 1, further comprising a NFC management server for managing the purchase transaction for each of a plurality of products registered with the NFC management server with respect to a particular seller.

4. The NFC system of claim 1, further comprising a NFC management server for (i) generating a customer payable invoice for the purchase transaction, responsive to receiving a confirmation of a customer actuating a buy button provided on the customer device when the customer device scans the checkout price tag, and (ii) transmitting the customer payable invoice to the customer device.

5. The NFC system of claim 4, further comprising a software application, in signal communication with the NFC management server, configured to automatically open the customer payable invoice on a display of the customer device in an absence of opening a website of a brand of the product by the customer device and/or further comprising a computing platform, implemented at least by the NFC management server, for providing a registration service to sellers for enabling the sellers to use the NFC system to accomplish the purchase transaction for registered products, optionally
wherein the registration service receives at least a company profile, a list of products, and a list of product profiles, and a list of unique identifiers, wherein each of the unique identifiers corresponds to a respective one or respective type of the products, and wherein each of the products has the checkout price tag associated therewith for enabling the purchase transaction there for and/or wherein the registration service and the purchase transaction are provided as respective cloud services using a cloud computing configuring for the computing platform.

6. The NFC system of claim 4, wherein the computing platform, through at least the NFC management server, receive any particular one of a plurality of customer selectable electronic payment services, optionally wherein the plurality of customer selectable electronic payment services comprises at least one e-banking system internal to and implemented by a respective one of the plurality of sellers.

7. The NFC system of claim 4, wherein the NFC system is configured for use in a brick and mortar store to perform e-commerce as the purchase transaction by an actual present customer in the brick and mortar store, optionally wherein the e-commence involves {checkout station}-free checkout and purchase of products.

8. The NFC system of claim 1, wherein the NFC platform provides a seller selectable option of the checkout price tag corresponding to (i) an actual product to be bought by a customer and (ii) a sample product representative of the actual product deliverable only subsequent to a payment confirmation.

9. The NFC system of claim 1, wherein the purchase transaction is cashier-free, payment terminal free, and bank wire transfer free, by automatically invoking at least one of a plurality of electronic payment services for use on a mobile device of a customer purchasing the product that is accepted by the seller of the product.

10. The NFC system of claim 1, wherein the checkout price tag is associated with a physical object proximate to the product, the physical object selected from the group consisting of a printed photograph, a drawing, a postcard, a brochure, a newspaper, a magazine, an advertisement, a poster, a book, and a kiosk and/or wherein the checkout price tag is implemented as a sticker having a readable NFC chip embedded therein.

11. The NFC system of claim 1, further comprising an inventory-less kiosk displaying one or more product samples to be sold and later delivered responsive to scanning the checkout price tag and a tapping a buy button related to the checkout price tag of the one or more product samples

12. The NFC system of claim 1, further comprising a printer for printing the checkout price tag to include a NFC antenna and NFC chip using electrically conductive ink.

13. The NFC system of claim 1, wherein the customer device scannable NFC physical tag is encoded with the unique identifier, the product price, and the description of the product for all products on a given catalog page of a catalog to provide a single page-level NFC tag for the given catalog page enabling purchasing all of the products on the given catalog page using the single NFC tag, and/or wherein the customer device scannable NFC physical tag is encoded with the unique identifier, the product price, and the description of the product for all products in a catalog to provide a single catalog-level NFC tag enabling purchasing of all of the products in the catalog using the single NFC tag.

14. A method for using Near Field Communication (NFC) to interact with a customer device enabled with a NFC scanning capability, the method comprising:
initiating, using a checkout price tag, a purchase transaction for a product associated with the checkout price tag responsive to a scanning of the checkout price tag, the checkout price tag having a customer device scannable NFC physical tag encoded with a unique identifier, a product price, and a description of the product.

15. A computer program product for using Near Field Communication (NFC) to interact with a customer device enabled with a NFC scanning capability, the computer program product comprising a non-transitory computer readable storage medium having program instructions embodied therewith, the program instructions executable by a computer to cause the computer to perform a method comprising:
initiating, using a checkout price tag, a purchase transaction for a product associated with the checkout price tag responsive to a scanning of the checkout price tag, the checkout price tag having a customer device scannable NFC physical tag encoded with a unique identifier, a product price, and a description of the product.
